# EUROPÄISCHE PATENTANMELDUNG

(11) **EP 1 780 684 A1**
(43) Veröffentlichungstag der Anmeldung: **02.05.2007**
(21) Anmeldenummer: 06018818.2
(22) Anmeldetag: 08.09.2006
(51) Int. Cl.: G07F 19/00

(54) **System und Verfahren zum Auszahlen von Bargeld**

(30) Priorität: 21.10.2005 DE 102005050605
(71) Anmelder: Wincor Nixdorf International GmbH, 33106 Paderborn (DE)
(72) Erfinder: Grupe, Frank, 33649 Bielefeld (DE)

(57) **Zusammenfassung**

Die Erfindung betrifft ein Verfahren zum Auszahlen von Bargeld an einem Geldautomaten. Hierbei kann ein Kunde auf eine Datenverarbeitungseinrichtung für ein Netzwerk von Geldautomaten mittels Online-Banking oder Telefon-Banking zugreifen und für sein Konto Daten wie die Höhe eines Auszahlungsbetrages oder Einzahlungsbetrages vorbestimmen, wobei bei einer anschließenden Transaktion am Geldautomaten eine Auszahlung gemäß des zuvor eingestellten Auszahlungsbetrages (bzw. Einzahlung) erfolgen kann, da diese Daten an den Geldautomaten übermittelt worden sind.

## Beschreibung

Die vorliegende Erfindung betrifft ein System zum Auszahlen von Bargeld mit einer Mehrzahl von Geldautomaten, die eine Ausgabevorrichtung für Bargeld und Identifizierungsmittel zur Identifizierung von Kunden haben, und mit einer Datenverarbeitungseinrichtung, die über eine elektronische Datenverbindung mit den Geldautomaten verbunden ist und einen Speicher hat, in dem Kundenkonten gespeichert sind. Ferner betrifft sie ein Verfahren zum Auszahlen von Bargeld. Die Erfindung kann auch für die Einzahlung von Bargeld verwendet werden.

Geldautomaten haben üblicherweise ein Kartenlesegerät als Identifizierungsmittel, mit dessen Hilfe sich ein Kunde über eine Bankkarte identifizieren kann. Darüber hinaus muss sich der Kunde üblicherweise durch Eingabe einer Geheimzahl, der sogenannten PIN, authentifizieren.

Die Identifizierungsdaten von der Bankkarte und die PIN werden über die elektronische Datenverbindung an die Datenverarbeitungseinrichtung übertragen, bei der es sich beispielsweise um den Server eines Kreditinstitutes handelt. In der Datenverarbeitungseinrichtung werden die Identifizierungsdaten und die PIN überprüft. Bei erfolgreicher Identifizierung und Authentifizierung gestattet die Datenverarbeitungseinrichtung die Auszahlung oder Einzahlung eines Geldbetrages.

Um die Auszahlung oder Einzahlung durchzuführen, wird der Kunde üblicherweise durch ein Bedienungsmenü geführt, das auf einem Bildschirm des Geldautomaten angezeigt wird. Im Rahmen dieses Bedienungsmenüs kann der Kunde beispielsweise die Höhe eines gewünschten Auszahlungsbetrages eingeben. Dies ist jedoch manchen Kunden zu aufwendig und sie wünschen eine schnellere Bedienung am Geldautomaten. Zudem treten bei Geldautomaten zunehmend Sicherheitsprobleme durch Manipulationsversuche von Dritten auf, die zu einer Unsicherheit bei den Kunden führen.

Der vorliegenden Erfindung liegt die Aufgabe zugrunde, Systeme und Verfahren der eingangs genannten Art hinsichtlich der Kosten, Wartezeiten und Sicherheit zu verbessern.

Diese Aufgabe wird bei einem System der eingangs genannten Art dadurch gelöst, dass ein Kunde auf die Datenverarbeitungseinrichtung für ein Netzwerk von Geldautomaten mittels Online-Banking oder Telefon-Banking Zugriff hat und für sein Konto Daten wie die Höhe eines Auszahlungsbetrages oder Einzahlungsbetrages vorbestimmt, wobei bei einer anschließenden Transaktion am Geldautomaten eine Auszahlung gemäß dem zuvor eingestellten Auszahlungsbetrages (bzw. Einzahlung) erfolgen kann, da diese Daten an den Geldautomaten übermittelt werden.

Die Aufgabe wird ferner durch ein Verfahren nach Anspruch 6 gelöst. Vorteilhafte Weiterbildungen sind in den abhängigen Ansprüchen angegeben.

Unter dem Begriff "Online-Banking" wird dabei jegliche Erledigung von Zahlungsverkehr und Bankgeschäften verstanden, die per Datenfernübertragung (z.B. über das Internet oder Direkteinwahl bei der Bank) zwischen dem Kunden und der Bank stattfindet.

Unter dem Begriff "Telefon-Banking" wird jede Art von Zahlungsverkehr und Bankgeschäft verstanden, die über eine Telefonverbindung zwischen dem Kunden und der Bank abgewickelt werden.

Das erfindungsgemäße System unterscheidet sich vom Stand der Technik also darin, dass die Höhe des Auszahlungsbetrages nicht direkt am Geldautomaten eingegeben wird, sondern vor der Auszahlung mittels Online-Banking oder Telefon-Banking. Dadurch entfällt die Notwendigkeit, ein Bedienungsmenü anzubieten, in dem der Kunde den auszuzahlenden Betrag eingibt. Die Geldautomaten benötigen dann beispielsweise keinen Bildschirm mehr und können deshalb einfacher und preiswerter aufgebaut sein. Durch den Wegfall des Bedienungsmenüs wird aber auch die Zeit, die der Kunde zur Auszahlung am Geldautomat benötigt, drastisch reduziert, wie anhand der unten beschriebenen Ausführungsbeispiele näher erläutert wird. Dadurch können Wartezeiten vermieden werden, ohne die Zahl der Geldautomaten zu erhöhen, was wiederum Kosten spart. Dies gilt in gleicher Weise für voreingestellte Einzahlungen.

Schließlich führt das erfindungsgemäße System zu einer wesentlich erhöhten Sicherheit. Denn selbst wenn eine unberechtigte Person sowohl in den Besitz der Bankkarte oder einer Kopie derselben und in Kenntnis der PIN gelangen sollte, kann sie nicht beliebige Beträge am Geldautomaten auszahlen lassen, denn der Geldautomat gestattet selbst bei erfolgreicher Identifikation und Authentifikation nur die Auszahlung desjenigen Auszahlungsbetrages, der zuvor mittels Online-Banking oder Telefon-Banking auf die Datenverarbeitungseinrichtung übertragen wurde. Kurz gesagt, kann sich die unberechtigte Person nur so viel Geld auszahlen lassen, wie die berechtigte Person zuvor mittels Online-Banking "bestellt" hat. Dies stellt eine gewaltige Erhöhung der Sicherheit gegen Missbrauch dar, die der Kunde zudem durch Festlegung des Auszahlungsbetrages selbst beeinflussen kann.

Gemäß einer ersten vorteilhaften Variante der Erfindung ist die Datenverarbeitungseinrichtung so programmiert, dass sie nach der Entgegennahme von Auszahlungsdaten eine einmalige Auszahlung gemäß dem Auszahlungsbetrag gestattet. Das bedeutet, dass eine weitere Auszahlung erst dann möglich ist, wenn der Kunde über Online-Banking oder Telefon-Banking eine weitere Auszahlung in Auftrag gegeben hat, d.h. wenn neue Auszahlungsdaten auf die Datenverarbeitungseinrichtung übertragen wurden.

In diesem Fall kann auf Authentifizierungsmittel am Geldautomaten sogar verzichtet werden. Denn eine Person, die unberechtigterweise in den Besitz der Bankkarte oder einer Kopie derselben gekommen ist, kann sich am Geldautomaten maximal den Betrag auszahlen lassen, den die berechtigte Person per Online- oder Telefon-Banking in Auftrag gegeben hat. Das Risiko, das mit Diebstahl oder Verlust der Bankkarte einhergeht, ist also nicht größer als das Risiko des Diebstahls oder Verlustes des Bargeldes, das die berechtigte Person sich ohnehin hatte auszahlen lassen und mit sich führen wollen. Dafür bietet ein Verzicht auf Authentifizierungsmittel die Vorteile, dass Geldautomaten noch einfacher und preiswerter gestaltet werden können, dass die Auszahlung noch zügiger durchgeführt werden kann, und dass der Kunde seine Bankkarte Dritten zur Auszahlung von Bargeld überlassen kann.

In einer vorteilhaften Weiterbildung umfassen die Auszahlungsdaten ferner die Angabe eines Zeitfensters, innerhalb dessen die Datenverarbeitungseinrichtung eine Auszahlung gestattet. Auch dadurch ist die Sicherheit gegen Auszahlung an Unbefugte erhöht, und der Kunde hat durch Angabe eines engen Zeitfensters die Möglichkeit, das Risiko für einen Missbrauch zu verringern.

Gemäß einer zweiten vorteilhaften Variante ist die Datenverarbeitungseinrichtung so programmiert, dass sie nach der Entgegennahme von Auszahlungsdaten eine wiederholte Auszahlung gemäß dem Auszahlungsbetrag gestattet, dergestalt, dass bei jeder neuen Identifizierung eines Kunden an einem der Geldautomaten der zugehörige Auszahlungsbetrag ausgegeben wird.

Gemäß der zweiten Variante legt der Kunde somit den Auszahlungsbetrag im Online-Banking- oder Telefon-Bankingprozess fest und bekommt diese Summe jedes Mal ausbezahlt, wenn er sich an einem Geldautomaten identifiziert und gegebenenfalls authentifiziert. Diese wiederholte Auszahlung gemäß Auszahlungsbetrag findet so lange statt, bis der Kunde den Auszahlungsbetrag mittels Online-Banking oder Telefon-Banking ändert. Die Variante der wiederholten Auszahlung hat den Vorteil, dass der Kunden den Auszahlungsbetrag nicht vor jeder Auszahlung per Online-Banking oder Telefon-Banking anfordern muss und sich rasch und unkompliziert einen Standardbetrag auszahlen lassen kann.

Eine erhöhte Sicherheit gegen Missbrauch ist auch bei der zweiten Variante gegeben, da eine unberechtigte Person sich nur diesen Standardbetrag, jedoch keinen höheren Betrag auszahlen lassen kann. Allerdings kann eine unberechtigte Person sich diesen Standardbetrag mehrmals hintereinander auszahlen lassen. Um den dadurch möglichen Schaden zu begrenzen, gestattet nach einer vorteilhaften Weiterbildung die Datenverarbeitungseinrichtung eine wiederholte Auszahlung nur, wenn seit der letzten Auszahlung eine vorbestimmte Zeitspanne verstrichen ist. Diese vorbestimmte Zeitspanne kann der Kunde vorteilhafter Weise selbst per Online-Banking oder Telefon-Banking festlegen.

In einer besonders vorteilhaften Weiterbildung sieht das System beide Varianten, sowohl diejenige der einmaligen Auszahlung als auch diejenige der wiederholten Auszahlung vor, wobei der Kunde durch Online-Banking oder Telefon-Banking zwischen den Varianten wählen kann. Dazu enthalten die Auszahlungsdaten vorzugsweise Informationen darüber, ob der Auszahlungsbetrag zur einmaligen oder zur wiederholten Auszahlung bestimmt ist.

Vorzugsweise prüft die Datenverarbeitungseinrichtung, ob die Auszahlungsdaten eine Kennzeichnung eines bestimmten Geldautomaten enthalten, und gestattet, wenn dies der Fall ist, nur eine Auszahlung an diesem bestimmten Geldautomaten. Dadurch kann die Sicherheit weiter erhöht werden, weil eine unbefugte Person neben den Identifikations- und Authentifikationsdaten auch wissen muss, an welchem Geldautomat die Auszahlung gestattet ist. Und selbst wenn eine kriminelle Person zusätzlich zu den Identifikations- und Authentifikationsdaten den vorbestimmten Geldautomaten kennen sollte, wäre der Missbrauch für sie äußerst riskant, weil sich der bestimmte Geldautomat bei einem Verdacht auf Missbrauch einfach überwachen lässt.

Weitere Vorteile und Merkmale der vorliegenden Erfindung ergeben sich aus der folgenden Beschreibung, in der das erfindungsgemäße System und das erfindungsgemäße Verfahren anhand von Ausführungsbeispielen unter Bezugnahme auf die beigefügten Zeichnungen näher erläutert werden. Darin zeigen
- Fig.1: eine schematische Darstellung einer Weiterbildung des erfindungsgemäßen Systems und
- Fig.2 bis 5: schematische Darstellungen von Ausführungsbeispielen von Geldautomaten des Systems.

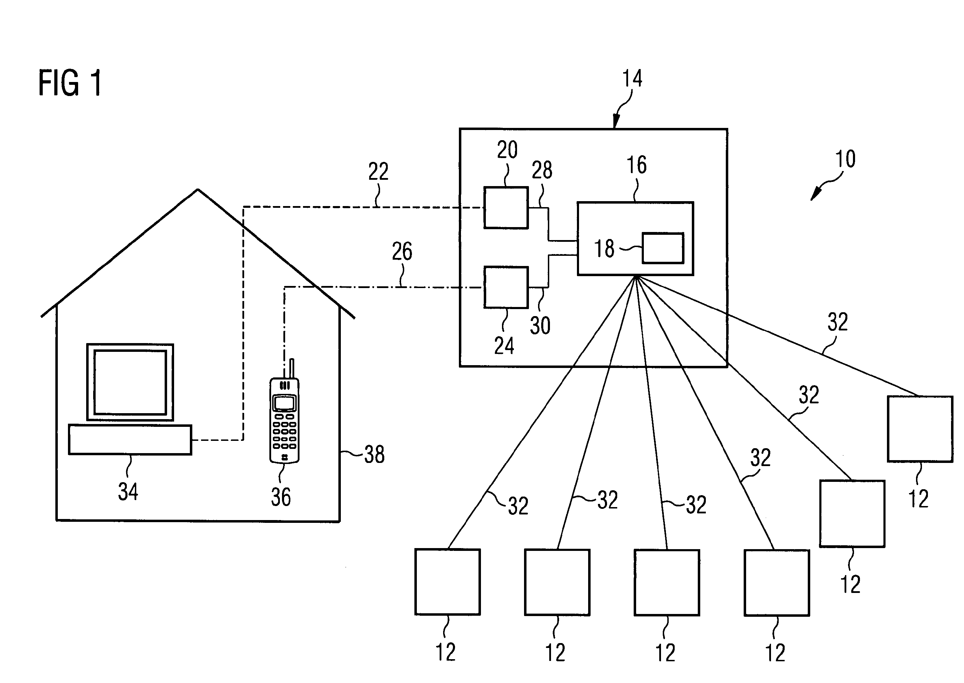

In Fig.1 ist ein System 10 zum Auszahlen und/oder Einzahlen von Bargeld gemäß einer Weiterbildung der Erfindung dargestellt. Zu dem System 10 gehört eine Mehrzahl von Geldautomaten 12, an denen Bargeld aus- und/oder eingezahlt werden kann. Die zum System 10 gehörigen Geldautomaten 12 können an beliebigen Orten im In- und Ausland aufgestellt sein.

Das System 10 umfasst ferner eine Datenverarbeitungseinrichtung 14, die in der Figur nur schematisch und stark vereinfacht dargestellt ist. Die Datenverarbeitungseinrichtung 14 wird vorzugsweise von einem Kreditinstitut bereitgestellt und in einer sicheren Umgebung betrieben. Die Datenverarbeitungseinrichtung 14 umfasst einen Server 16 mit einem Datenspeicher 18, auf dem Kundenkonten gespeichert sind. Ferner umfasst die Datenverarbeitungseinrichtung einen Rechner 20, der mit dem Internet 22 verbunden ist, und einen Rechner 24, der mit dem Telefonnetz 26 verbunden ist. Der Rechner 20 ist über eine Datenleitung 28 mit dem Server 16 verbunden und der Rechner 24 ist über eine Datenleitung 30 mit dem Server 16 verbunden.

Bereits aus dieser vereinfachten Darstellung wird klar, dass die Datenverarbeitungseinrichtung 14 durch eine Mehrzahl von Rechnern gebildet sein kann, insbesondere ist in der vorliegenden Erfindung unter dem Begriff "Datenverarbeitungseinrichtung" auch ein Computernetzwerk oder ein komplettes Rechenzentrum zu verstehen.

Die Datenverarbeitungseinrichtung 14 ist über eine erste elektronische Datenverbindung 32 mit den Geldautomaten 12 verbunden. Bei der ersten elektronischen Datenverbindung 32 handelt es sich beispielsweise um ein spezielles gegen äußeren Zugriff gesichertes Datennetz des Kreditinstituts.

Ferner sind in Fig.1 ein PC 34 und ein Telefon 36 dargestellt, die mit dem Internet 22 bzw. dem Telefonnetz 26 verbunden sind. Im gezeigten Ausführungsbeispiel befinden sich der PC 34 und das Telefon 36 im Haus 38 eines Kunden des Kreditinstituts. Der Kunde muss zunächst die Auszahlung mittels Online-Banking vom Computer 34 oder Telefon-Banking vom Telefon 36 vorbereiten. Dies kann entweder unter Verwendung eines Browsers über eine Website der Bank stattfinden, die beispielsweise auf dem Rechner 20 gespeichert sein kann, oder über ein sogenanntes Client-Programm, bei dem der Auszahlungsauftrag offline vorbereitet und erst nach Herstellung einer Online-Verbindung übertragen wird. Bei der Vorbereitung der Auszahlung gibt der Kunde mindestens die Kennzeichnung seines Kundenkontos (beispielsweise über seinen Benutzernamen oder seine Kontonummer) und die Höhe des Auszahlungsbetrages an. Diese Auszahlungsdaten werden mit Hilfe einer elektronischen Signatur unterzeichnet und über das Internet 22 auf die Datenverarbeitungseinrichtung 14 übertragen. Für die elektronische Signatur können sämtliche bekannten Verfahren verwendet werden, insbesondere die Verwendung von PIN und TAN ("Transaktionsnummer") oder des HBCI ("Home-Banking-Computer-Interface").

Alternativ können die Auszahlungsdaten auch durch Telefon-Banking unter Verwendung des Telefons 36 auf die Datenverarbeitungseinrichtung 14 übertragen werden, wobei beispielsweise ein Sprachcomputer (nicht gezeigt) oder aber auch ein Call-Center zwischengeschaltet sein kann.

Nachdem die Auszahlungsdaten auf die Datenverarbeitungseinrichtung 14 übertragen wurde, braucht sich der Kunde nur noch an einem der Geldautomaten 12 zu identifizieren und (falls das System dies vorsieht) zu authentifizieren. Die Identifikation geschieht in diesem Ausführungsbeispiel über Daten, die auf der Magnetspur einer Bankkarte gespeichert sind, die der Kunde in den Geldautomaten einführt. Die Authentifikation kann über die Eingabe einer PIN oder über biometrische Merkmale des Kunden geschehen.

Die Identifizierungsdaten und ggf. die Authentifizierungsdaten werden über die erste elektronische Datenverbindung 32 von dem Geldautomaten 12 auf die Datenverarbeitungseinrichtung 14 übertragen und dort auf an sich bekannte Weise überprüft. Ferner überprüft die Datenverarbeitungseinrichtung 14, ob für den soeben identifizierten Kunden Auszahlungsdaten vorliegen. Falls Auszahlungsdaten vorliegen, übermittelt die Datenverarbeitungseinrichtung 14 den Auszahlungsbetrag gemäß Auszahlungsdaten über die erste elektronische Datenverbindung 32 zum Geldautomaten 12. Durch diese Übermittlung des Auszahlungsbetrages wird die Auszahlung durch den Geldautomaten 12 gestattet bzw. initiiert. Das Bargeld in Höhe des zuvor mittels Online-Banking oder Telefon-Banking festgelegten Auszahlungsbetrages wird an den Kunden ausgezahlt.

Liegen keine Auszahlungsdaten für diesen Kunden vor, so kann der Kunde einen Geldbetrag über das allgemein verfügbare Bedienungsmenü erhalten. Für den Fall, dass der Kunde zwar einen Auszahlungsbetrag voreingestellt hat, jedoch zum Zeitpunkt der Transaktion einen anderen Auszahlungsbetrag wünscht, kann vorgesehen sein, dass der Kunde gleichfalls das Bedienungsmenü des Geldautomaten anwählen kann und den voreingestellten Auszahlungsbetrag ignoriert.

Neben der Kennzeichnung des Kundenkontos und der Höhe des Auszahlungsbetrages kann der Kunde bei der Vorbereitung der Auszahlung am PC 34 bzw. am Telefon 36 weitere Eigenschaften der Auszahlung festlegen. So kann er beispielsweise festlegen, ob der Auszahlungsbetrag zur einmaligen Auszahlung oder zur wiederholten Auszahlung bestimmt ist. Im Falle einer einmaligen Auszahlung kann er ferner ein Zeitfenster angeben, innerhalb dessen die Auszahlung gestattet ist. Aus Sicherheitsgründen kann das Kreditinstitut ein Standardzeitfenster voreinstellen, das der Kunde online oder telefonisch ändern kann.

Im Falle einer wiederholten Auszahlung kann der Kunde eine vorbestimmte Zeitspanne vorgeben, die mindestens seit der letzten Auszahlung verstrichen sein muss, damit eine erneute Auszahlung gestattet wird. Aus Sicherheitsgründen kann eine derartige Zeitspanne vom Kreditinstitut voreingestellt sein und durch den Kunden online oder telefonisch geändert werden. Schließlich kann der Kunde angeben, an welchem der Geldautomaten 12 eine Auszahlung gestattet sein soll. An den übrigen Geldautomaten 12 ist eine Auszahlung nicht möglich. Dadurch wird, wie oben beschrieben, die Sicherheit gegen Missbrauch erhöht.

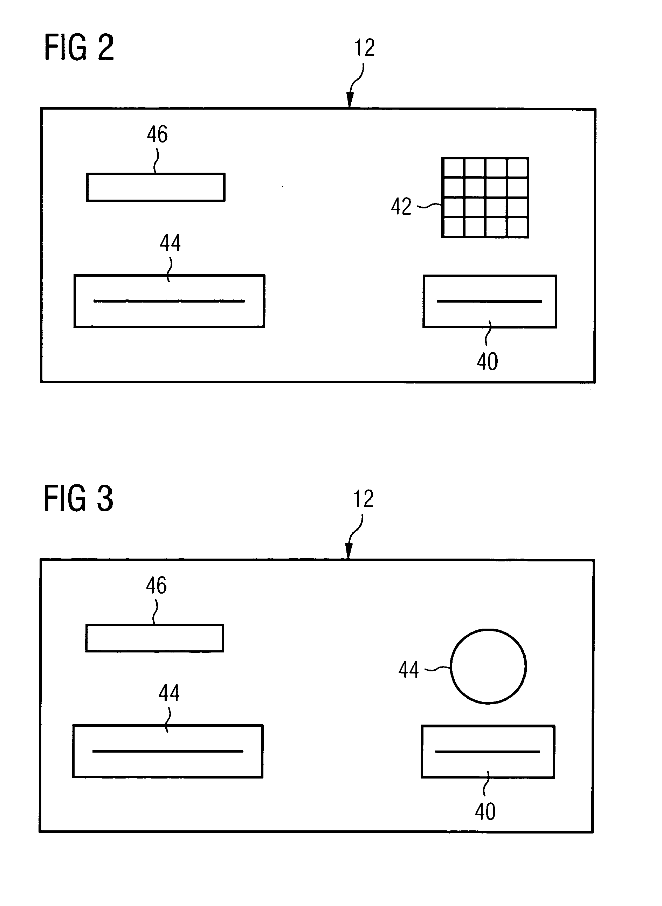

In Fig.2 ist ein Ausführungsbeispiel eines Geldautomaten 12 des Systems schematisch dargestellt. Der Geldautomat 12 hat ein Kartenlesegerät 40 zum Lesen einer Bankkarte, eine numerische Tastatur 42 zur Eingabe einer PIN, eine Ausgabevorrichtung 44 zur Ausgabe von Geldscheinen und eine LCD-Anzeige 46.

Die LCD-Anzeige 46 dient zum Anzeigen der nötigsten Anweisungen, beispielsweise "Karte eingeben" oder "PIN eingeben". Man beachte jedoch, dass der Geldautomat 12 in Fig.2 keinen bei herkömmlichen Geldautomaten üblichen Monitor benötigt, auf denen Bedienmasken zur Eingabe des Auszahlungsbetrages angezeigt werden. Dadurch ist der Geldautomat 12 in Fig.2 einfacher und kostengünstiger im Aufbau als herkömmliche Geldautomaten. Dadurch, dass der Kunde beim gezeigten System keinen Auszahlungsbetrag eingeben muss, wird der Auszahlungsvorgang erheblich beschleunigt, so dass Wartezeiten für Kunden verringert werden.

In Fig.3 ist eine weitere Ausführungsform eines Geldautomaten 12 für das erfindungsgemäße System gezeigt. Der Geldautomat 12 in Fig.3 unterscheidet sich von demjenigen in Fig.2 lediglich dadurch, das anstelle der Tastatur 42 eine Vorrichtung 44 zum Erfassen biometrischer Merkmale des Kunden vorgesehen ist. Nachdem der Kunde sich am Terminal 12 von Fig.3 durch Eingabe seiner Bankkarte identifiziert hat, kann er durch Überprüfung der biometrischen Merkmale beispielsweise der Iris oder des Fingerabdrucks unter Verwendung der Vorrichtung 44 authentifiziert werden. Eine Authentifizierung mit Hilfe biometrischer Merkmale ist insofern sicherer als mittels PIN, da eine PIN möglicherweise von einem Unberechtigten ausgespäht werden kann, und sich dann der Unberechtigte mit Hilfe der ausgespähten PIN ebenfalls authentifizieren kann. Man beachte ferner, dass bei dem Geldautomaten 12 in Fig.3 auf eine Tastatur vollständig verzichtet werden konnte, da eine Tastatur weder zum Eingeben einer PIN noch zum Eingeben eines Auszahlungsbetrages benötigt wird.

Wie in der Beschreibungseinleitung ausführlich erläutert wurde, besteht ein wesentlicher Vorteil des erfindungsgemäßen Systems in einer erhöhten Sicherheit gegenüber Missbrauch durch Unberechtigte. Die Erfahrungen mit dem Online-Banking haben gezeigt, dass dieses gegenüber Zugriff von Unberechtigten für alle praktischen Zwecke sicher gestaltet werden kann. Es ist daher davon auszugehen, dass es einer unberechtigten Person nicht gelingen wird, selbst durch Online- oder Telefon-Banking Auszahlungsdaten zu erzeugen. Das bedeutet jedoch, dass selbst wenn es der unberechtigten Person gelingen sollte, sich anstelle des berechtigten Kunden am Geldautomaten 12 zu identifizieren und zu authentifizieren, die unberechtigte Person sich allenfalls Bargeld in Höhe des vom Kunden zuvor festgelegten Auszahlungsbetrages vom Konto des Kunden auszahlen lassen kann. Es besteht somit nicht die Gefahr, dass eine unberechtigte Person beliebige Summen vom Konto des Kunden abbuchen und auszahlen lässt.

Darüber hinaus kann der Kunde das Schadensrisiko beispielsweise dadurch begrenzen, dass er für eine wiederholte Auszahlung einen moderaten Standard-Auszahlungsbetrag wählt oder eine relativ große Zeitspanne wählt, die zwischen zwei wiederholten Auszahlungen verstreichen muss. Im Falle einer einmaligen Auszahlung kann der Kunde das Risiko dadurch minimieren, dass er die Auszahlung durch Online-Banking relativ kurzfristig vorbereitet oder dass er bei der Vorbereitung der Auszahlung durch Online-Banking ein relativ enges Zeitfenster und/oder einen bestimmten Geldautomaten (d.h. einen bestimmten Standort) vorgibt, für die eine Auszahlung gestattet wird.

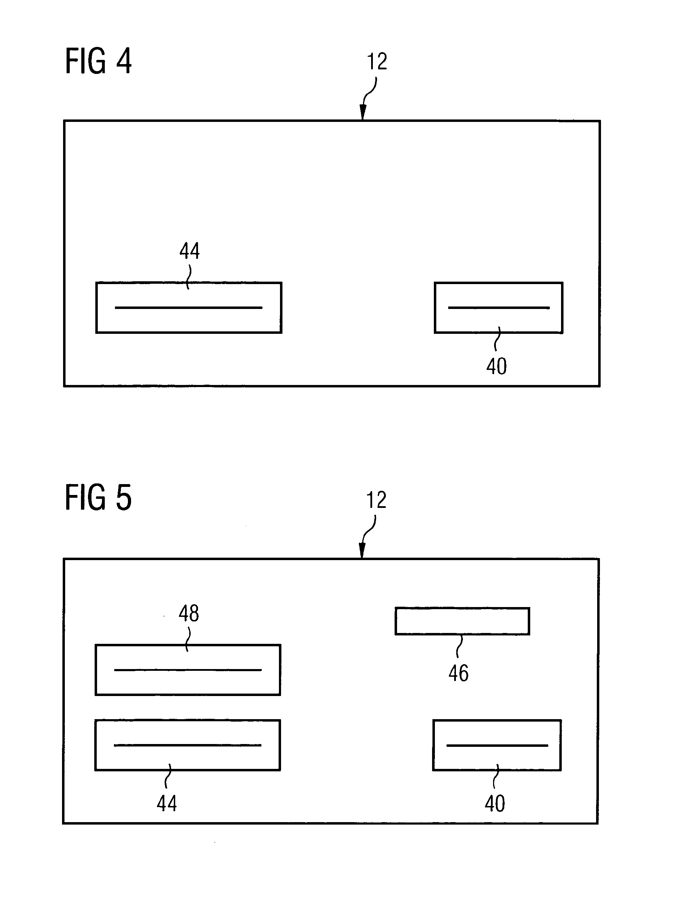

Gerade im Hinblick auf einmalige Auszahlungen lässt sich das Missbrauchsrisiko vom Kunden derart verringern, dass möglicherweise auf eine Authentifizierung vollständig verzichtet werden kann. Dann kann der Geldautomat äußerst einfach gestaltet werden, wie dies beispielweise in Fig.4 gezeigt ist. Der Geldautomat 12 in Fig.4 hat lediglich ein Kartenlesegerät 40 und eine Ausgabevorrichtung 44 für Bargeld. Sobald sich der Kunde am Geldautomaten 12 in Fig.4 durch Eingeben seiner Bankkarte in den Kartenleser 40 identifiziert hat, wird ohne weitere Authentifizierung das Bargeld entsprechend dem zuvor mittels Online-Banking übermittelten Auszahlungsbetrag ausgegeben. Der Geldautomat 12 in Fig.4 ist noch einfacher und kostengünstiger als diejenigen in den Fig.2 und 3, und die Auszahlung erfolgt noch rascher, wodurch Wartezeiten vermieden werden können.

In Fig. 5 ist ein weiterer Geldautomat 12 gezeigt. Der Geldautomat 12 in Fig.5 umfasst neben einem Kartenlesegerät 40, einer Ausgabevorrichtung 44 und einer LCD-Anzeige 46 eine Eingabevorrichtung 48 für Bargeld. An diesem Geldautomaten kann über die Eingabevorrichtung 48 Bargeld eingezahlt werden, entsprechend einem Einzahlungsbetrag, der zuvor vom Kunden über online-Banking oder Telefon-Banking auf die Datenverarbeitungseinrichtung 14 übertragen wurde.

### Bezugszeichen

- 10: System zum Auszahlen und/oder Einzahlen von Bargeld
- 12: Geldautomat
- 14: Datenverarbeitungseinrichtung
- 16: Server
- 18: Datenspeicher
- 20: Rechner
- 22: Internet
- 24: Rechner
- 26: Telefonnetz
- 28: Datenleitung
- 30: Datenleitung
- 32: erste elektronische Datenverbindung
- 34: PC
- 36: Telefon
- 40: Kartenlesegerät
- 42: Tastatur
- 44: Ausgabevorrichtung für Bargeld
- 46: LCD-Anzeige
- 48: Eingabevorrichtung für Bargeld

## Patentansprüche

1. System (10) zum Auszahlen von Bargeld mit einer Mehrzahl von Geldautomaten (12), die eine Ausgabevorrichtung (44) für Bargeld und Identifizierungsmittel (40) zur Identifizierung von Kunden haben,
und mit einer Datenverarbeitungseinrichtung (14), die über eine erste elektronische Datenverbindung (32) mit den Geldautomaten (12) verbunden ist und die einen Speicher (18) hat, in dem Kundenkonten gespeichert sind,
**dadurch gekennzeichnet, dass** die Datenverarbeitungseinrichtung (14) zur Entgegennahme von Auszahlungsdaten eingerichtet ist, die über eine zweite elektronische Datenverbindung (22, 26) mittels Online-Banking oder Telefon-Banking auf die Datenverarbeitungseinrichtung (14) übertragen werden, wobei die Auszahlungsdaten mindestens die Kennzeichnung eines Kundenkontos und die Höhe eines Auszahlungsbetrages umfassen,
und dass die Datenverarbeitungseinrichtung (14) so programmiert ist, dass sie nach einer Identifizierung des Inhabers des Kundenkontos am Geldautomat (12) mit Hilfe der Identifizierungsmittel (40) eine Auszahlung gemäß dem Auszahlungsbetrag durch die Ausgabevorrichtung (44) des Geldautomats (12) gestattet.

2. System (10) nach Anspruch 1, **dadurch gekennzeichnet, dass** die Identifizierungsmittel ein Kartenlesegerät (40) für Bankkarten umfassen.

3. System (10) nach Anspruch 1 oder 2, **dadurch gekennzeichnet, dass** die Geldautomaten (12) Authentifizierungsmittel (42, 44) zur Authentifizierung von Kunden haben und dass die Datenverarbeitungseinrichtung (14) so programmiert ist, dass sie eine Auszahlung nur gestattet, wenn sich ein Kunde authentifiziert hat.

4. System (10) nach Anspruch 3, **dadurch gekennzeichnet, dass** die Authentifizierungsmittel eine Tastatur (42) zum Eingeben einer Geheimzahl umfassen.

5. System (10) nach Anspruch 3, **dadurch gekennzeichnet, dass** die Authentifizierungsmittel eine Vorrichtung (44) zum Erfassen biometrischer Merkmale des Kunden umfassen.

6. Verfahren zum Auszahlen von Bargeld an einem Geldautomaten (12) mit einer Ausgabevorrichtung (44) für Bargeld und Identifizierungsmittel (40) zur Identifizierung von Kunden, bei dem Auszahlungsdaten mittels Online-Banking oder Telefon-Banking auf eine Datenverarbeitungseinrichtung (14) übertragen werden, die über eine elektronische Datenverbindung (32) mit dem Geldautomaten (12) verbunden ist und die einen Speicher (18) hat, in dem Kundenkonten gespeichert sind,
wobei die Auszahlungsdaten bzw. Einzahlungsdaten mindestens die Kennzeichnung eines Kundenkontos und die Höhe eines Auszahlungsbetrages bzw. Einzahlungsbetrages umfassen,
und bei dem nach einer Identifizierung des Inhabers des Kundenkontos am Geldautomaten (12) mit Hilfe der Identifizierungsmittel (40) eine Auszahlung gemäß dem Auszahlungsbetrag durch die Ausgabevorrichtung (44) des Geldautomaten (12) gestattet wird.

7. Verfahren nach Anspruch 6, **dadurch gekennzeichnet, dass** nach der Übertragung von Auszahlungsdaten auf die Datenverarbeitungseinrichtung (14) eine einmalige Auszahlung gemäß dem Auszahlungsbetrag gestattet wird.

8. Verfahren nach Anspruch 6 oder 7, **dadurch gekennzeichnet, dass** die Auszahlungsdaten ferner die Angabe eines Zeitfensters umfassen, innerhalb dessen eine Auszahlung gestattet wird.

9. Verfahren nach einem der Ansprüche 6 bis 8, **dadurch gekennzeichnet, dass** nach der Übertragung von Auszahlungsdaten auf die Datenverarbeitungseinrichtung (14) eine wiederholte Auszahlung gemäß dem Auszahlungsbetrag gestattet wird, dergestalt, dass bei jeder neuen Identifizierung eines Kunden an einem der Geldautomaten (12) der zugehörige Auszahlungsbetrag ausgegeben wird.

10. Verfahren nach Anspruch 9, **dadurch gekennzeichnet, dass** eine wiederholte Auszahlung nur gestattet wird, wenn seit der letzten Auszahlung eine vorbestimmte Zeitspanne verstrichen ist.

11. Verfahren nach einem der Ansprüche 6 bis 10, **dadurch gekennzeichnet, dass** von der Datenverarbeitungseinrichtung (14) geprüft wird, ob die Auszahlungsdaten eine Kennzeichnung eines bestimmten Geldautomaten (12) enthalten, und, wenn dies der Fall ist, nur eine Auszahlung an diesem bestimmten Geldautomaten (12) gestattet wird.

12. Verfahren nach einem oder mehreren der Ansprüche 6 bis 11, **dadurch gekennzeichnet, dass** der Geldautomat (12) mit einer Eingabevorrichtung (48) für Bargeld versehen ist und dass auch ein Einzahlungsbetrag mittels Online-Banking oder Telefon-Banking auf die Datenverarbeitungseinrichtung (14) übertragen werden kann, und dass eine Einzahlung gemäß des Einzahlungsbetrages durch die Eingabevorrichtung des Geldautomaten (12) gestattet wird.
